(19) Europäisches Patentamt / European Patent Office / Office européen des brevets

(11) **EP 4 248 586 B1**

(12) **EUROPEAN PATENT SPECIFICATION**

(45) Date of publication and mention
of the grant of the patent:
**26.11.2025 Bulletin 2025/48**

(21) Application number: **21909302.8**

(22) Date of filing: **17.12.2021**

(51) International Patent Classification (IPC):
*G01S 5/16* (2006.01)　　*G01S 3/782* (2006.01)
*H04B 10/116* (2013.01)　　*G06T 7/77* (2017.01)
*G06T 7/73* (2017.01)　　*G06T 7/00* (2017.01)

(52) Cooperative Patent Classification (CPC):
**G01S 3/782; G01S 5/16; G06T 7/73; G06T 7/77;**
**H04B 10/116;** G06T 2207/10024

(86) International application number:
**PCT/CN2021/139347**

(87) International publication number:
**WO 2022/135306 (30.06.2022 Gazette 2022/26)**

(54) **A POSITIONING SYSTEM BASED ON AN IMAGE CAPTURING MODULE WITHIN A RECEIVER**

POSITIONIERUNGSSYSTEM AUF BASIS EINES BILDERFASSUNGSMODULS IN EINEM EMPFÄNGER

SYSTÈME DE POSITIONNEMENT BASÉ SUR UN MODULE DE CAPTURE D'IMAGE DANS UN RÉCEPTEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.12.2020 SG 10202012843X**

(43) Date of publication of application:
**27.09.2023 Bulletin 2023/39**

(73) Proprietors:
• **Huawei Technologies Co., Ltd.**
**Shenzhen, Guangdong 518129 (CN)**
• **The University of Adelaide**
**Adelaide, South Australia 5005 (AU)**

(72) Inventors:
• **HO, Siu Wai**
**Adelaide, South Australia 5095 (AU)**

• **ATMARAM CHOMAL, Sunil Kumar**
**Singapore 138589 (SG)**
• **YU, Zhan**
**Singapore 138589 (SG)**
• **BRITTON, Matthew, Scott**
**Adelaide, South Australia 5070 (AU)**

(74) Representative: **Thun, Clemens**
**Mitscherlich PartmbB**
**Patent- und Rechtsanwälte**
**Karlstraße 7**
**80333 München (DE)**

(56) References cited:
CN-A- 111 413 670　　US-A1- 2014 152 809
US-A1- 2017 187 991　　US-A1- 2017 187 991
US-A1- 2020 025 943　　US-A1- 2020 025 943
US-A1- 2020 374 005　　US-A1- 2020 374 005
US-A1- 2020 386 843

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

This application relates to a system for determining a location of a receiver in an enclosed space whereby its location is obtained based on information associated with at least three transmitters that are provided within the enclosed pace. In particular, once the images of the transmitters are captured by an image capturing module provided within the receiver, the receiver is configured to process the captured image and based on the outcome of this process, determine its location in the enclosed space.

## Background

It is challenging to implement an indoor positioning system as compared to an outdoor positioning system because indoor systems have relatively high accuracy requirements (<1 m). Futhermore, indoor positioning systems do not have dedicated infrastructure to support beacons for transmission of signals for positioning unlike outdoor positioning systems which may rely on GPS and its equivalent signals for outdoor positioning.

To address this problem, those skilled in the art have proposed the use of a system that employs a rolling shutter method such as a Luxapose system. In this system, a light emitting diode (LED) light is configured to switch on and off rapidly (e.g. around 200Hz) at a speed that is not noticeable by the human eye. However, when this image is captured by a camera, it may appear like a fringe pattern.This occurs because the CMOS sensors in a camera scans images column-by-column. As such, when the light sources generate different on/off signals, different fringe patterns can be captured by the camera. By exploiting this property, different light sources may then be identified.

Unfortunately, when the light sources are located furtheraway from the camera, the light sources become blur due to the camera's limited focal length. When this happens, the captured patterns may become unclear. Additionally, this system typically requires three or more beacons (ideally at least four) to be captured individually by the camera. In other words, all the beacons have to be within the field of view (FoV) of the camera in order for this to happen. Due to the limited field of view of the camera, this condition may not be easily satisfied

Those skilled in the art have also proposed that the system above may be improved through the use of LEDs that have sufficiently large surface areas, e.g. LEDsthat have a diameter of 17.5 cm and an output power of 18 W. This is to ensure that the LEDs may be clearly seen by the camera. However, due to the limited FoV of the camera, this increase in the diameter of the LEDs are problematic as the entirety of the LEDs may not be captured by the camera. Another issue associated with this approach is that the camera's design has to be more complex as image processing techniques have to be employed to extract the required information from the fringe pattern. Furthermore, the camera would have to cater for various scenarios such as when the camera is far away from the light source, the captured image would be compressed causing the fringes to become close together. Further, if the image is out of the camera's focus, it may be even more difficult for the camera to process these fringes.

In yet another method proposed by those skilled in the art, the proposed method requires a camera to capture an image of a reference light source and subsequently find five reference points on the captured image. However, this method will only work if the light source is always in the camera's focus and will not work if the image is out of focus. As expected, this method requires a more complicated image processing technique and also assumes that the azimuth angle between the global coordinate system and the camera's coordinate system is known.

For the above reasons, those skilled in the art are constantly looking fora camera positioning system that does not require a complex camera/receiver, utilizes a simple low-cost transmitter design whereby communication links between the transmitters are not required.

The document US 2020/374005 Al shows an indoor visible light positioning method and system based on a single LED lamp.

## Summary

The present invention is defined by the independent claims. Further advantageous developments are shown by the dependent claims.

The above and other problems are solved and an advance in the art is made by the apparatus and methods provided by embodiments in accordance with the application.

A first advantage of the embodiments of the application is that the application may utilize existing smartphones as the receiver of the system without any hardware modifications being made to the smartphone.

A second advantage of embodiments of the application is that the application uses a simple angle of arrival (AOA) method, rather than complicated image processing techniques, to compute the receiver's position.

A third advantage of the embodiments of the application is that the transmitters are standalone and two-way communication means are not required to be set up and maintained between the transmitters and the receiver thereby simplifying the implementation of the system.

A fourth advantage of the embodiments of the application is that the main larger transmitter in the arrangement may utilize existing lighting means in a room, e.g. a room's existing lighting source, and does not require major hardware modifications to be made to the existing lighting means. Further, through the use of existing light means, this implies that users of the application will not be distracted by the introduction of unsightly additional light sources in the enclosed space.

A fifth advantage of embodiments of the application is that once the main transmitter has been detected by the receiver, the secondary smaller transmitter in the arrangement may then easily be subsequently detected as its position would be adjacent the main transmitter.

A sixth advantage of the embodiments of the application is that the transmitter arrangement is distinguishable from its mirror image and hence, avoids false identification of transmitters.

The above advantages are provided by embodiments of a device and method in accordance with the application operating in the following manner.

According to a first aspect of the application, a module provided within a receiver for determining a location of the receiver in an enclosed space is disclosed, the module comprising:an image capturing module configured to capture an image of at least two transmitters that are provided within the enclosed space; anda processing module configured to:generate a rotational matrix based on measurements obtained from a pre-calibrated inertial measurement unit (IMU) provided within the receiver; identify, from the captured image, a unique arrangement associated with the at least two transmitters whereby the unique arrangement is used to determine locations of each of the transmitters in the enclosed space;for each of the transmitters, compute AOA via a line of sight (LOS) unit vector from the receiver to a location of the transmitter on an image plane of the image capturing module based on the location of the transmitter on the image plane and based on a focal length of the image capturing module;convert the LOS unit vectors from the receiver's coordinate system to a global coordinate system using the rotational matrix; andestimate the location of the receiver using a maximum-likelihood estimate scheme, the locations of each of the transmitters, and the LOS unit vectors associated with each of the transmitters.

With regard to the first aspect of the application, at least two transmitters comprise a first transmitter that is larger in size than a second transmitter.

With regard to the first aspect of the application, the first transmitter comprises a transmitter configured to emit a monochromatic light, and the second transmitter being configured to emit a coloured light.

With regard to the first aspect of the application, the processing module being configured to identify the unique arrangement associated with the at least two transmitters comprises the processing module being further configured to:determine, from a database communicatively linked to the module, an arrangement of transmitters that match with the identified unique arrangement associated with the at least two transmitters, andobtain from the database, locations of all the transmitters in the determined arrangement of transmitters.

With regard to the first aspect of the application, each LOS unit vector representing AOA from the receiver to a transmitter is defined as:

$$\hat{V} = \frac{V}{|V|}$$

where $V = (x, y, z)$, z is defined as the focal length of the image capturing module, and x and y define the location of the transmitter on an image plane of the image capturing module with regard to the centre of the image plane.

With regard to the first aspect of the application, the maximum-likelihood estimate scheme comprises a least square method.

According to a second aspect of the application, a method for determining a location of a receiver in an enclosed space using a module provided within a receiver is disclosed, the method comprising: capturing, using an image capturing module provided within the module, an image of at least two transmitters that are provided within the enclosed space; generating, using a processing module provided within the module, a rotational matrix based on measurements obtained from a pre-calibrated inertial measurement unit (IMU) provided within the receiver; identifying, using the processing module, from the captured image, a unique arrangement associated with the at least two transmitters whereby the unique arrangement is used to determine locations of each of the transmitters in the enclosed space; computing, using the processing module, for each of the transmitters, an angle of arrival (AOA) as a line of sight (LOS) unit vector from the receiver to a location of the transmitter on an image plane of the image capturing module based on the location of the transmitter on the image plane and based on a focal length of the image capturing module;converting, using the processing module, the LOS unit vectors from the receiver's coordinate system to a global coordinate system using the rotational matrix; andestimating, using the processing module, the location of the receiver using a maximum-likelihood estimate scheme, the locations of each of the transmitters, and the LOS unit vectors associated with each of the transmitters.

With regard to a second aspect of the application, the at least two transmitters comprise a first transmitter that is larger in size than a second transmitter.

With regard to a second aspect of the application, the first transmitter comprises a transmitter configured to emit a monochromatic light, and the second transmitter being configured to emit a coloured light.

With regard to a second aspect of the application, the identifying the unique arrangement associated with the at least two transmitters further comprises: determining, from a database communicatively linked to the module, an arrangement of transmitters that match with the identified unique arrangement associated with the at least two transmitters, andobtaining from the database, locations of all the transmitters in the determined arrangement of transmitters.

With regard to a second aspect of the application, each LOS unit vector from the receiver to a transmitter is defined as:

$$\hat{V} = \frac{V}{|V|}$$

where $V = (x, y, z)$, z is defined as the focal length of the image capturing module, and x and y define the location of the transmitter on an image plane of the image capturing module with regard to the centre of the image plane.

With regard to a second aspect of the application, the maximum-likelihood estimate scheme comprises a least square method.

**Brief Description of the Drawings**

The above advantages and features in accordance with this application are described in the following detailed description and are shown in the following drawings:

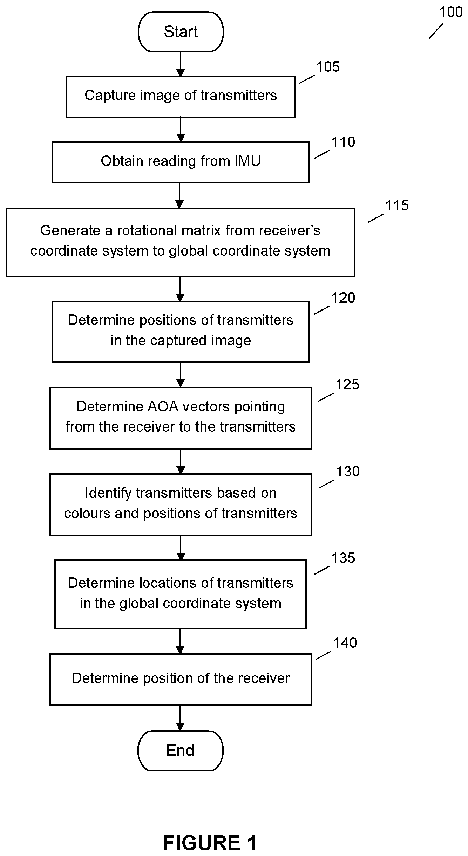

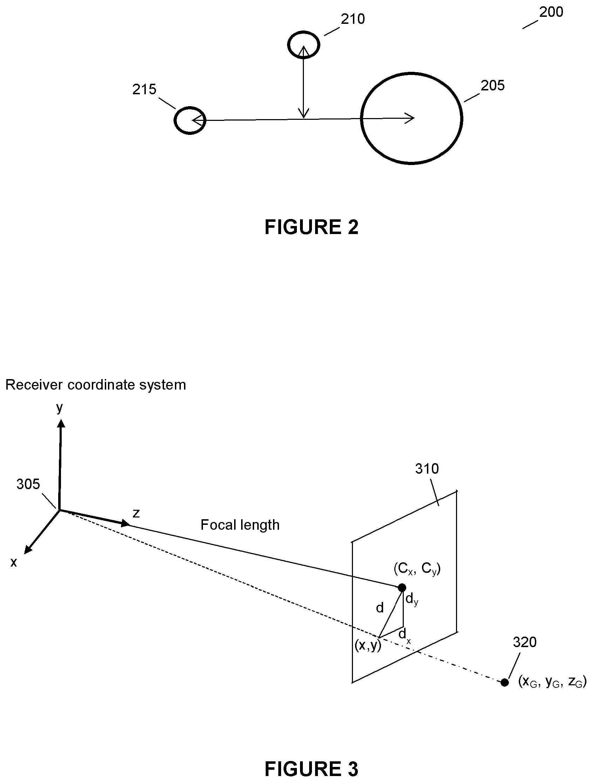

Figure 1 illustrating a process carried out by a receiver to determine a position of the receiver in accordance with embodiments of the application; Figure 2illustrating a block diagram representative of transmitters in accordance with embodiments of the application;and Figure 3 illustrating the receiver's perspective camera model based on the receiver's coordinate system in accordance with embodiments of the application;

**Detailed Description**

The present application will now be described in detail with reference to several embodiments thereof as illustrated in the accompanying drawings. In the following description, numerous specific features are set forth in order to provide a thorough understanding of the embodiments of the present application. It will be apparent, however, to one skilled in the art, that embodiments may be realised without some or all of the specific features. Such embodiments should also fall within the scope of the current application. Further, certain process steps and/or structures in the following may not have been described in detail and the reader will be referred to a corresponding citation so as to not obscure the present application unnecessarily.

Further, one skilled in the art will recognize the receiver may comprise of many functional units such as an image capturing module, a processing module and/or an inertial measure unit that may be labelled as modules/units throughout the specification. The person skilled in the art will also recognize that a module may be implemented as circuits, logic chips or any sort of discrete component and that the receiver may be made up of many different modules. Still further, one skilled in the art will also recognize that a module may be implemented in software which may then be executed by a variety of processors. In embodiments of the application, a module may also comprise computer instructions or executable code that may instruct a computer processor to carry out a sequence of events based on instructions received.

Figure 1 sets out an exemplary flowchart of process 100 for capturing images of transmitters using an image capturing moduleprovided within a receiver and determining the receiver's position based on the identified transmitters in accordance with embodiments of the application. Process 100 which is performed by a module provided within a receiver comprisesanimage capturing module and a processing module both being configured to carry out the following steps:

Step 105: capture image of transmitters;

Step 110: obtain a reading from an inertial measurement unit (IMU);

Step 115: generate a rotational matrix from measurements taken from the IMU to convert froma receiver's coordinate system to a global coordinate system;

Step 120: determine positions of transmitters in the captured images;

Step 125: determine AOAs as line of sight vectors pointing from the receiver to the transmitters and align the line of sight vectors using the rotational matrix obtained in step 115;

Step 130: identify transmitters based on colours and/or positions of transmitters;

Step 135: determine positions of the transmitters in the global coordinate system; and

Step 140: determine a location of the receiver.

In general, the system for determining a location of a receiver in an enclosed area such as a room, comprises of a module provided within the receiver whereby the module further comprises an image capturing module, and a processing module. The system also includes at least two transmitters that are provided within the enclosed area. In embodiments of the application, the transmitters are standalone and do not need to be synchronized or communicatively linked to the receiver and are attached to an upper surface of a room, such as the ceiling or the upper part of a wall. Additionally, the main transmitterin the arrangement may comprise existing lighting means for the enclosed area such as, but not limited to, light emitting diodes (LEDs), light bulbs, spotlights, and any other light sources. By using existing lighting means, this avoids the need for unsightly light transmitters to be installed within the enclosed space.

An exemplary block diagram of the transmitters are illustrated in Figure 2. Figure 2 illustrates transmitter 205 which may comprise a light emitting diode (LED) and two other transmitters 210 and 215 which may comprise smaller LEDs (relative to transmitter 205). In embodiments of the application, transmitter 205 may also comprise a white LED while transmitters 210 and 215 may comprise coloured LEDs. One skilled in the art will recognize that transmitter 205 may comprise of any monochromatic coloured LED without departing from the application. The difference in sizes between transmitter 205 and transmitters 210, 215 ensures that mirror images of these transmitters are distinguishable. It should also be noted that the arrangement of the transmitters relative to each other and the colour combinations of these transmitters may be used to differentiate the various transmitter arrangements from each other. For example, when three (3) different transmitters are used, this implies that there could be $7^2$ types of different transmitter arrangements (i.e. the number '7'is derived from the 8 states in which a colouredtransmitter (e.g. RGB LED) maybe set, with the "all switched off" state being removed from the 8 states, while the number '2' refers to the number of colouredtransmitters (where the third transmitter is configured to emit a monochrome colour). One skilled in the art will also recognize that at the minimum, two transmitters are required and any additional number of transmitters may be added to the system without departing from the application.Additionally, the detection of the main transmitter 205 in the image helps narrow down the search space in the image for either transmitter 210 or 215 as transmitters 210 and/or 215 would be provided adjacent to transmitter 205, in the arrangement.

Transmitters 205, 210 and 215 may be configured to output a constant light intensity or if required, they may be configured to transmit information about their locations by adding a driver to one of the transmitters so that visible light communication schemes may be added to control the intensity of the transmitter's emitted light. In embodiments of the application, the driver may be added to the largest of the three transmitters, i.e. transmitter 205.

In embodiments of the application, transmitter 205 may comprise amonochromatic light emitted LED such as a white LED that consumes around 5 Watts and this LED may be used for illumination and as an anchor for positioning. As for transmitters 210 and/or 215, these coloured LEDs are always ON and typically comprise common low-powered LEDs which consume around 60 mW each, and typically have wide viewing angles, e.g. around120°.

In embodiments of the application, the receiver may comprise, but is not limited to, a typical smartphone having an inertial measurement unit (IMU) module, and the image capturing module may comprise a front facing camera and/or a rear facing camera of the smartphone. The IMU module comprises an electronic device that measures and reports a force applied to the smartphone, the smartphone's angular rate and orientation and this is usually accomplished using a combination of accelerometers, gyroscopes and/or magnetometers. The detailed working of the IMU module is omitted for brevity as its detailed workings are known to one skilled in the art.

With reference to Figure 1, process 100 illustrates a process for capturing images of transmitters attached to an upper surface of a room and for determininga receiver's position in the room based on the images of the identified transmitters. Process 100 may be carried out using an image capturing module and/or a processing module that are both provided within the module in the receiver.

Process 100 begins at step 105. At this step, process 105 will first capture the image of the transmitters. The image capturing module within the receiver may be set to have a shutter speed of at least 1/8000 seconds or faster so that the captured image's quality may be retained even though the receiver is not maintained at a static position when the images of the transmitters are captured. With this shutter speed, this also ensures that other objects surrounding the transmitters would not be captured as they would appear blurry and dim in the captured image. In embodiments of the application, the ISO of the camera will be set to a low range, between 50-100 so that the transmitters would stand out from the background of the captured image.

Process 100 then proceeds to step 110 whereby the readings from the receiver's IMU which has been pre-calibrated with the receiver are obtained. In embodiments of the application, readings such as, but not limited to, the receiver's angular rate and orientation may be obtained from the IMU at this step. At the next step, i.e. step 115, process 100 will then generate a rotational matrix from the readings obtained from the IMU. The rotational matrix is required as it will be usedto transform a vector that is defined in the receiver's coordinate system to a vector that is defined in the global coordinate system, i.e. the room's coordinate system. In embodiments of the application, the rotational matrix may be set up and obtained directly from measurements generated by the receiver's IMU.

As mentioned above, therotational matrix may be used to convert a receiver's coordinate system to a room's coordinate system and this matrix typically comprises of three components: roll, pitch and yaw. Roll and pitch can be obtained from an accelerometer provided within the receiver while yaw can be obtained from a magnetometerprovided within the receiver.A line of sight (LOS) vector representing AOA obtained between the receiver and a transmitter may be rotated using this rotational matrix and the details of this rotation is omitted for brevity as it is known to one skilled in the art .

Magnetometer readings can be affected by local magneticdisturbances fromsurrounding metal objects in the room. As such, in accordance with embodiments of the application, only the accelerometer in the receiver may be used to compute the roll and pitch component of the rotational matrix. In such a scenario, When a LOS vector is rotated using such a rotational matrix, it will not be aligned in the yaw dimension. Hence a grid search over the full range of yaw i.e. 0-2*pi, is done one as part of receiver position computation. For each value of yaw that is selected from a fine grid from 0-2*pi, the receiver position and the residuals are computed whereby the solution that produces the least sum square of residuals is selected as the final position.The least squares method is used as the maximum-likelihood estimate scheme to arrive at a close approximation of the final position

At step 120, process 100 will then determine the positions of the transmitters relative to each otherin the captured image. Process 100 will search through the captured image to identify points within the image that may comprise transmitters associated with the system. In embodiments of the application, this may be done by comparing the arrangement of the identified points in the captured image with images of known transmitter configurations or unique transmitter arrangements as contained within a preloaded database provided within the receiver. This database may also be located on a server or a remote database and the receiver may be configured to exchange information with this database either through wireless communication means or wired communication means. Once the transmitters have been identified in the captured image, process 400 then proceeds to step 125.

At this step, process 100 will determine angle of arrivals as LOS unit vectors that are pointing from the receiver to each of the transmitters. It should be noted that these vectors will initially be based on the receiver's coordinate system and will have to be transformed thereafter to the global coordinate system and this may be done using the rotational matrix previously described above.(Note that it is assumed that receiver is aware of theintrinsicrotation between the IMU and the image capturing module inside the receiver, and this intrinsic rotation is taken into account for in the total rotation between the receiver's coordinate system and the global coordinate system)

With reference to Figure 3, a LOS vector in the receiver's coordinate system is defined as a vector from the focal point of the receiver (i.e. from the focal point of the image capturing module) to the location of transmitter 320 on image plane 310. As such, coordinates (x, y) represent the location of transmitter 320 at image plane 310 with respect to the centre ($C_x$, $C_y$) of image plane 310. As the focal length of the receiver to image plane 310 is known (i.e. this parameter is an intrinsic parameter of the receiver), the LOS vector to transmitter 320 in the receiver's coordinate system may be defined as $V$ = (x, y, z). The LOS vector may then be normalized to produce a unit

vector, $\hat{V}$ defined as:

$$\hat{V} = \frac{V}{|V|}$$

Where$|V|$ is the norm of $V$.

One skilled in the art will recognize that the computations used to generate the LOS unit vector for transmitter 320 may be similarly applied to obtain the LOS unit vectors for other transmitters, e.g. transmitters 205, 210 and 215, without departing from the application.

The rotational matrix is then applied to these LOS unit vectors to convert the LOS unit vectors that were defined in the receiver's coordinate system to a vector that is defined in the global coordinate system, i.e. the room's coordinate system.

Process 100 then proceeds to step 130 whereby based on the colours and positions/arrangements of the transmitters (relative to each other), process 100 will then determine the locations of the transmitters in the global coordinate system at step 135. The positions of these transmitters will be based on the global or the room's coordinate system. In embodiments of the application, the receiver will be preloaded with a database that contains all the transmitter configurations (i.e. their arrangements and colour combinations) along with each transmitter's associated location in the room. For example, for transmitter configuration 200 as illustrated in Figure 2, transmitter 205 may be associated with a particular ($x_1$, $y_1$, $z_1$) location, transmitter 210 may be associated with a particular ($x_2$, $y_2$, $z_2$) location, and transmitter 215 may be associated with a particular ($x_3$, $y_3$, $z_3$) location whereby these locations are all based on the room's coordinate system. In other embodiments of the application, the transmitters may be configured to broadcast their locations to the receiver through wireless communications means such as, but not limited to, Bluetooth, WI-Fi and/or cellular networks.

Once the locations of the transmitters in the global coordinate system have been determined, process 100 then proceeds to step 140 to determine the position of the receiver in the global coordinate systemby estimating the position of the receiver based on a maximum-likelihood estimate scheme that is computed using the LOS unit vectors and the locations of the transmitters. In embodiments of the application, the estimated position of the receiver may be obtained using a least squares method to solve the LOS unit vectors to arrive at a maximum-likelihood estimate of the position of the receiver.

In other words, if $\hat{V}_{205}$ is a LOS unit vector from the receiver to transmitter 205 whereby the location $t_{205}$ = ($x_{205}$, $y_{205}$, $z_{205}$) was obtained from the previous step, if $\hat{V}_{210}$ is a LOS unit vector from the receiver to transmitter 210 whereby the location $t_{210}$ = ($x_{210}$, $y_{210}$, $z_{210}$) was obtained from the previous step and if $\hat{V}_{215}$ is a LOS unit vector from the centre of the receiver to transmitter 215

whereby the location $t_{215} = (x_{215}, y_{215}, z_{215})$ was obtained from the previous step, the estimated position of the receiver can be obtained by using a maximum-likelihood estimate scheme with the values above. A maximum-likelihood estimate scheme that may be used comprises, but is not limited to, a least squares method or any other similar nonlinear/linear regression methods. The detailed working of the maximum-likelihood estimate scheme is omitted for brevity as its detailed workings are known by one skilled in the art..

Further, one skilled in the art will recognize that the steps in process 100 are interchangeable and are not limited to the sequence illustrated in Figure 1.

Step 140 is best explained using the following example.

For example, assume that 'z' is defined as the unknown location of the receiver in a room having three transmitters $T_1$, $T_2$, and $T_3$,, and that $t_1$, $t_2$, and $t_3$ are the locations of transmitters $T_1$, $T_2$, and $T_3$, respectively in the global coordinate system, $\hat{V}_1$, $\hat{V}_2$, $\hat{V}_3$ are the LOS unit vectors pointing from the receiver to transmitters $T_1$, $T_2$, and $T_3$, respectively in the global coordinate system and that $r_1$, $r_2$, and $r_3$ are the unknown distances from the receiver to transmitters $T_1$, $T_2$, and $T_3$, respectively. As such, the following may be defined:

$$t_1 = z + (r_1 \cdot \hat{V}_1)$$

$$\therefore t_1 - z = r_1 \cdot \hat{V}_1$$

Due to the fact that $t_1$, z and $\hat{V}_1$ are in the same plane,

$$(t_1 - z) \times \hat{V}_1 = 0,$$

This equation is valid as its cross product function will be zero in the absence of measurement noise. It is useful to note that '$\times$' refers to a cross product function.

Hence, when the equation is rearranged, this results in:

$$t_1 \times \hat{V}_1 = z \times \hat{V}_1$$

Hence, for transmitter $T_1$, $a_1 = B_1 \cdot z$ where $a_1$ is an output of a vector product for $t_1 \times \hat{V}_1$, while $B_1 \cdot z$ is a vector product $b_1 \times z$, where $B_1$ is a transpose of a skew symmetric matrix of $\hat{V}_1$,

For transmitter $T_2$, $a_2 = B_2 \cdot z$, where $a_2$ is an output of a vector product for $t_2 \times \hat{V}_2$, while $B_2 \cdot z$ is a vector product $b_2 \times z$, where $B_2$ is a transpose of a skew symmetric matrix of $\hat{V}_2$,

For transmitter $T_3$, $a_3 = B_3 \cdot z$. where $a_3$ is an output of a vector product for $t_3 \times \hat{V}_3$, while $B_3 \cdot z$ is a vector product $b_3 \times z$, where $B_3$ is a transpose of a skew symmetric matrix of $\hat{V}_3$

Based on the above $A = \begin{bmatrix} a_1 \\ a_2 \\ a_3 \end{bmatrix}; B = \begin{bmatrix} B_1 \\ B_2 \\ B_3 \end{bmatrix}$.

Hence when A = B · z, the resulting location of the receiver, z, may be obtained from the least squares estimate as z = *inverse* (B' · B) · B' · A, where *inverse()* is an inverse matrix and B' is a transpose of B.

**Claims**

1. A module provided within a receiver for determining a location of the receiver in an enclosed space, the module comprising:

    an image capturing module configured to capture an image of at least two transmitters that are provided within the enclosed space; and
    a processing module configured to:

        generate (115) a rotational matrix based on measurements obtained from a pre-calibrated inertial measurement unit, IMU, provided within the receiver;
        identify (130), from the captured image, a unique arrangement associated with the at least two transmitters whereby the unique arrangement is used to determine locations of each of the transmitters in the enclosed space;
        for each of the transmitters, compute an angle of arrival, AOA, as a line of sight, LOS, unit vector from the receiver to a location of the transmitter on an image plane of the image capturing module based on the location of the transmitter on the image plane and based on a focal length of the image capturing module;
        convert the LOS unit vectors from the receiver's coordinate system to a global coordinate system using the rotational matrix; and
        estimate (140) the location of the receiver using a maximum-likelihood estimate scheme, the locations of each of the transmitters, and the LOS unit vectors associated with each of the transmitters.

2. The module according to claim 1 wherein the at least two transmitters comprise a first transmitter that is larger in size than a second transmitter.

3. The module according to claim 2 whereby the first transmitter comprises a transmitter configured to emit a monochromatic light, and the second transmitter being configured to emit a coloured light.

4. The module according to claim 1 wherein the processing module being configured to identify the unique arrangement associated with the at least two transmitters comprises the processing module being further configured to:

determine, from a database communicatively linked to the module, an arrangement of transmitters that match with the identified unique arrangement associated with the at least two transmitters, and

obtain from the database, locations of all the transmitters in the determined arrangement of transmitters.

**5.** The module according to claim 1 wherein each LOS unit vector from the receiver to a transmitter is defined as:

$$\hat{V} = \frac{V}{|V|}$$

where $V = (x, y, z)$, z is defined as the focal length of the image capturing module, and x and y define the location of the transmitter on an image plane of the image capturing module with regard to the centre of the image plane.

**6.** The module according to claim 1 wherein the maximum-likelihood estimate scheme comprises a least square method.

**7.** A method for determining a location of a receiver in an enclosed space using a module provided within a receiver, the method comprising:

capturing (105), using an image capturing module provided within the module, an image of at least two transmitters that are provided within the enclosed space;

generating (115), using a processing module provided within the module, a rotational matrix based on measurements obtained from a pre-calibrated inertial measurement unit, IMU, provided within the receiver,

identifying (130), using the processing module, from the captured image, a unique arrangement associated with the at least two transmitters whereby the unique arrangement is used to determine locations of each of the transmitters in the enclosed space;

computing, using the processing module, for each of the transmitters,

an angle of arrival, AOA, as a line of sight, LOS, unit vector from the receiver to a location of the transmitter on an image plane of the image capturing module based on the location of the transmitter on the image plane and based on a focal length of the image capturing module;

converting, using the processing module, the LOS unit vectors from the receiver's coordinate system to a global coordinate system using the rotational matrix; and

estimating (140), using the processing module, the location of the receiver using a maximum-likelihood estimate scheme, the locations of each of the transmitters, and the LOS unit vectors associated with each of the transmitters.

**8.** The method according to claim 7 wherein the at least two transmitters comprise a first transmitter that is larger in size than a second transmitter.

**9.** The method according to claim 8 whereby the first transmitter comprises a transmitter configured to emit a monochromatic light, and the second transmitter being configured to emit a coloured light.

**10.** The method according to claim 7 wherein the identifying the unique arrangement associated with the at least two transmitters further comprises:

determining, from a database communicatively linked to the module, an arrangement of transmitters that match with the identified unique arrangement associated with the at least two transmitters, and

obtaining from the database, locations of all the transmitters in the determined arrangement of transmitters.

**11.** The method according to claim 7 wherein each LOS unit vector from the receiver to a transmitter is defined as:

$$\hat{V} = \frac{V}{|V|}$$

where $V = (x, y, z)$, z is defined as the focal length of the image capturing module, and x and y define the location of the transmitter on an image plane of the image capturing module with regard to the centre of the image plane.

**12.** The method according to claim 7 wherein the maximum-likelihood estimate scheme comprises a least square method.

**Patentansprüche**

**1.** Modul, das innerhalb eines Empfängers bereitgestellt ist, zum Bestimmen eines Standorts des Empfängers in einem umschlossenen Raum, wobei das Modul umfasst: ein Bilderfassungsmodul, das konfiguriert ist, um ein Bild von mindestens zwei Sendern, die innerhalb des umschlossenen Raums bereitgestellt sind, zu erfassen; und
ein Verarbeitungsmodul, das konfiguriert ist zum:

Erzeugen (115) einer Rotationsmatrix basierend auf Messungen, die von einer vorkalibrierten Trägheitsmesseinheit (IMU), die innerhalb des Empfängers bereitgestellt ist, erhalten werden;
Identifizieren (130), aus dem erfassten Bild, einer eindeutigen Anordnung, die den mindestens zwei Sendern zugeordnet ist, wobei die eindeutige Anordnung verwendet wird, um Standorte jedes der Sender in dem umschlossenen Raum zu bestimmen;
für jeden der Sender, Berechnen eines Einfallwinkels (AOA) als einen Sichtlinien(LOS)-Einheitsvektor von dem Empfänger zu einem Standort des Senders auf einer Bildebene des Bilderfassungsmoduls, basierend auf dem Standort des Senders auf der Bildebene und basierend auf einer Brennweite des Bilderfassungsmoduls;
Umwandeln der LOS-Einheitsvektoren von dem Koordinatensystem des Empfängers in ein globales Koordinatensystem unter Verwendung der Rotationsmatrix; und
Schätzen (140) des Standorts des Empfängers unter Verwendung eines Maximum-Likelihood-Schätzschemas, der Standorte jedes der Sender und der LOS-Einheitsvektoren, die jedem der Sender zugeordnet sind.

2. Modul nach Anspruch 1, wobei die mindestens zwei Sender einen ersten Sender, der größer ist als ein zweiter Sender, umfassen.

3. Modul nach Anspruch 2, wobei der erste Sender einen Sender, der konfiguriert ist, um ein monochromatisches Licht auszusenden, umfasst, und der zweite Sender konfiguriert ist, um ein farbiges Licht auszusenden.

4. Modul nach Anspruch 1, wobei das Verarbeitungsmodul, das konfiguriert ist, um die eindeutige Anordnung zu identifizieren, die den mindestens zwei Sendern zugeordnet ist, umfasst, dass das Verarbeitungsmodul ferner konfiguriert ist zum:

Bestimmen, aus einer Datenbank, die mit dem Modul kommunikativ verbunden ist, einer Anordnung von Sendern, die mit der identifizierten eindeutigen Anordnung, die den mindestens zwei Sendern zugeordnet ist, übereinstimmt, und
Erhalten, aus der Datenbank, von Standorten aller Sender in der bestimmten Anordnung von Sendern.

5. Modul nach Anspruch 1, wobei jeder LOS-Einheitsvektor von dem Empfänger zu einem Sender definiert ist als:

$$\hat{V} = \frac{V}{|V|}$$

wobei V = (x, y, z), z als die Brennweite des Bilderfassungsmoduls definiert ist und x und y den Standort des Senders auf einer Bildebene des Bilderfassungsmoduls in Bezug auf die Mitte der Bildebene definieren.

6. Modul nach Anspruch 1, wobei das Maximum-Likelihood-Schätzschema eine Methode der kleinsten Quadrate umfasst.

7. Verfahren zum Bestimmen eines Standorts eines Empfängers in einem umschlossenen Raum unter Verwendung eines Moduls, das innerhalb einer Empfängers bereitgestellt ist, wobei das Verfahren umfasst:

Erfassen (105), unter Verwendung eines Bilderfassungsmoduls, das innerhalb des Moduls bereitgestellt ist, eines Bildes von mindestens zwei Sendern, die innerhalb des umschlossenen Raums bereitgestellt sind;
Erzeugen (115), unter Verwendung eines Verarbeitungsmoduls, das innerhalb des Moduls bereitgestellt ist, einer Rotationsmatrix basierend auf Messungen, die von einer vorkalibrierten Trägheitsmesseinheit (IMU), die innerhalb des Empfängers bereitgestellt ist, erhalten werden;
Identifizieren (130), unter Verwendung des Verarbeitungsmoduls, aus dem erfassten Bild, einer eindeutigen Anordnung, die den mindestens zwei Sendern zugeordnet ist, wobei die eindeutige Anordnung verwendet wird, um Standorte jedes der Sender in dem umschlossenen Raum zu bestimmen;
Berechnen, unter Verwendung des Verarbeitungsmoduls, für jeden der Sender, eines Einfallwinkels (AOA) als einen Sichtlinien(LOS)-Einheitsvektor von dem Empfänger zu einem Standort des Senders auf einer Bildebene des Bilderfassungsmoduls, basierend auf dem Standort des Senders auf der Bildebene und basierend auf einer Brennweite des Bilderfassungsmoduls;
Umwandeln, unter Verwendung des Verarbeitungsmoduls, der LOS-Einheitsvektoren von dem Koordinatensystem des Empfängers in ein globales Koordinatensystem unter Verwendung der Rotationsmatrix; und

Schätzen (140), unter Verwendung des Verarbeitungsmoduls, des Standorts des Empfängers unter Verwendung eines Maximum-Likelihood-Schätzschemas, der Standorte jedes der Sender und der LOS-Einheitsvektoren, die jedem der Sender zugeordnet sind.

8. Verfahren nach Anspruch 7, wobei die mindestens zwei Sender einen ersten Sender, der größer ist als ein zweiter Sender, umfassen.

9. Verfahren nach Anspruch 8, wobei der erste Sender einen Sender, der konfiguriert ist, um ein monochromatisches Licht auszusenden, umfasst, und der zweite Sender konfiguriert ist, um ein farbiges Licht auszusenden.

10. Verfahren nach Anspruch 7, wobei das Identifizieren der eindeutigen Anordnung, die den mindestens zwei Sendern zugeordnet ist, ferner umfasst:

Bestimmen, aus einer Datenbank, die mit dem Modul kommunikativ verbunden ist, einer Anordnung von Sendern, die mit der identifizierten eindeutigen Anordnung, die den mindestens zwei Sendern zugeordnet ist, übereinstimmt, und

Erhalten, aus der Datenbank, von Standorten aller Sender in der bestimmten Anordnung von Sendern.

11. Verfahren nach Anspruch 7, wobei jeder LOS-Einheitsvektor von dem Empfänger zu einem Sender definiert ist als:

$$\hat{V} = \frac{V}{|V|}$$

wobei $V = (x, y, z)$, z als die Brennweite des Bilderfassungsmoduls definiert ist und x und y den Standort des Senders auf einer Bildebene des Bilderfassungsmoduls in Bezug auf die Mitte der Bildebene definieren.

12. Verfahren nach Anspruch 7, wobei das Maximum-Likelihood-Schätzschema eine Methode der kleinsten Quadrate umfasst.

**Revendications**

1. Module disposé à l'intérieur d'un récepteur pour la détermination d'un emplacement du récepteur dans un espace clos, le module comprenant :

un module de capture d'image configuré pour capturer une image d'au moins deux transmetteurs qui sont disposés à l'intérieur de l'espace clos ; et
un module de traitement configuré pour :

générer (115) une matrice de rotation basée sur des mesures obtenues à partir d'une unité de mesure inertielle, IMU, préétalonnée disposée à l'intérieur du récepteur ;
identifier (130), à partir de l'image capturée, un agencement unique associé aux au moins deux transmetteurs, moyennant quoi l'agencement unique est utilisé pour déterminer des emplacements de chacun des transmetteurs dans l'espace clos ;
pour chacun des transmetteurs, calculer un angle d'arrivée, AOA, comme vecteur unitaire de ligne de visée, LOS, entre le récepteur et un emplacement du transmetteur sur un plan d'image du module de capture d'image sur la base de l'emplacement du transmetteur sur le plan d'image et sur la base d'une longueur focale du module de capture d'image ;
convertir les vecteurs unitaires LOS du système de coordonnées du récepteur en un système de coordonnées global à l'aide de la matrice de rotation ; et
estimer (140) l'emplacement du récepteur à l'aide d'un schéma d'estimation du maximum de vraisemblance, des emplacements de chacun des transmetteurs, et des vecteurs unitaires LOS associés à chacun des transmetteurs.

2. Module selon la revendication 1, dans lequel les au moins deux transmetteurs comprennent un premier transmetteur dont la taille est supérieure à celle du second transmetteur.

3. Module selon la revendication 2, au moyen duquel le premier transmetteur comprend un transmetteur configuré pour émettre une lumière monochromatique, et le second transmetteur étant configuré pour émettre une lumière colorée.

4. Module selon la revendication 1, dans lequel le module de traitement configuré pour identifier l'agencement unique associé aux au moins deux transmetteurs comprend le module de traitement en outre configuré pour :

déterminer, à partir d'une base de données connectée de manière à communiquer au module, un agencement de transmetteurs qui correspond à l'agencement unique identifié associé aux au moins deux transmetteurs, et

obtenir, à partir de la base de données, des emplacements de tous les transmetteurs dans l'agencement déterminé de transmetteurs.

5. Module selon la revendication 1, dans lequel chaque vecteur unitaire LOS entre le récepteur et un transmetteur est défini comme suit :

$$\hat{V} = \frac{V}{|V|}$$

où $V = (x, y, z)$, $z$ est défini comme la longueur focale du module de capture d'image, et $x$ et $y$ définissent l'emplacement du transmetteur sur un plan d'image du module de capture d'image par rapport au centre du plan d'image.

6. Module selon la revendication 1, dans lequel le schéma d'estimation du maximum de vraisemblance comprend un procédé des moindres carrés.

7. Procédé permettant de déterminer un emplacement d'un récepteur dans un espace clos à l'aide d'un module disposé à l'intérieur d'un récepteur, le procédé comprenant :

la capture (105), à l'aide d'un module de capture d'image disposé à l'intérieur du module, d'une image d'au moins deux transmetteurs qui sont disposés à l'intérieur de l'espace clos ;
la génération (115), à l'aide d'un module de traitement disposé à l'intérieur du module, d'une matrice de rotation basée sur des mesures obtenues à partir d'une unité de mesure inertielle, IMU, préétalonnée disposée à l'intérieur du récepteur ;
l'identification (130), à l'aide du module de traitement, à partir de l'image capturée, d'un agencement unique associé aux au moins deux transmetteurs, moyennant quoi l'agencement unique est utilisé pour déterminer des emplacements de chacun des transmetteurs dans l'espace clos ;
le calcul, à l'aide du module de traitement, pour chacun des transmetteurs, d'un angle d'arrivée, AOA, comme vecteur unitaire de ligne de visée, LOS, entre le récepteur et un emplacement du transmetteur sur un plan d'image du module de capture d'image sur la base de l'emplacement du transmetteur sur le plan d'image et sur la base d'une longueur focale du module de capture d'image ;
la conversion, à l'aide du module de traitement, des vecteurs unitaires LOS du système de coordonnées du récepteur en un système de coordonnées global à l'aide de la matrice de rotation ; et

l'estimation (140), à l'aide du module de traitement, de l'emplacement du récepteur à l'aide d'un schéma d'estimation du maximum de vraisemblance, des emplacements de chacun des transmetteurs, et des vecteurs unitaires LOS associés à chacun des transmetteurs.

8. Procédé selon la revendication 7, dans lequel les au moins deux transmetteurs comprennent un premier transmetteur dont la taille est supérieure à celle du second transmetteur.

9. Procédé selon la revendication 8, au moyen duquel le premier transmetteur comprend un transmetteur configuré pour émettre une lumière monochromatique, et le second transmetteur étant configuré pour émettre une lumière colorée.

10. Procédé selon la revendication 7, dans lequel l'identification de l'agencement unique associé aux au moins deux transmetteurs comprend en outre :
la détermination, à partir d'une base de données connectée de manière à communiquer au module, d'un agencement de transmetteurs qui correspond à l'agencement unique identifié associé aux au moins deux transmetteurs, et l'obtention, à partir de la base de données, d'emplacements de tous les transmetteurs dans l'agencement déterminé de transmetteurs.

11. Procédé selon la revendication 7, dans lequel chaque vecteur unitaire LOS entre le récepteur et un transmetteur est défini comme suit :

$$\hat{V} = \frac{V}{|V|}$$

où $V = (x, y, z)$, $z$ est défini comme la longueur focale du module de capture d'image, et $x$ et $y$ définissent l'emplacement du transmetteur sur un plan d'image du module de capture d'image par rapport au centre du plan d'image.

12. Procédé selon la revendication 7, dans lequel le schéma d'estimation du maximum de vraisemblance comprend un procédé des moindres carrés.

Start

Capture image of transmitters — 105

Obtain reading from IMU — 110

Generate a rotational matrix from receiver's coordinate system to global coordinate system — 115

Determine positions of transmitters in the captured image — 120

Determine AOA vectors pointing from the receiver to the transmitters — 125

Identify transmitters based on colours and positions of transmitters — 130

Determine locations of transmitters in the global coordinate system — 135

Determine position of the receiver — 140

End

100

**FIGURE 1**

200

210

215

205

**FIGURE 2**

Receiver coordinate system

y

305

z

x

Focal length

310

$(C_x, C_y)$

$d_y$

$d$

$d_x$

$(x,y)$

320

$(x_G, y_G, z_G)$

**FIGURE 3**

**EP 4 248 586 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020374005 A1